# EUROPEAN PATENT APPLICATION

(11) **EP 1 207 453 A2**
(43) Date of publication of application: **22.05.2002**
(21) Application number: 01126854.7
(22) Date of filing: 12.11.2001
(51) Int. Cl.: G06F 9/44

(54) **Method for producing a user interface translation system**

(30) Priority: 15.11.2000 GB 0027811
(71) Applicant: Pace Micro Technology PLC, Saltaire, Shipley, BD18 3LF (GB)
(72) Inventor: Forrest, Simon, Ely, Cambridgeshire CB7 4FE (GB)
(74) Representative: Wood, Graham

(57) **Abstract**

The present invention provides a method of producing a user interface translation system for an electronic device, such as a broadcast cast data receiver (BDR). The BDR is connected to a television set for display of the user interface. The method includes the steps of attaching a unique label to each language component of the user interface. Data relating to each unique label of the language components is recorded into storage means, together with equivalent translations of each language component into at least one other language. The recorded data is linked with the user interface so that each unique label of the interface matches with an equivalent unique label of the recorded data. Upon user-selection of one of the available language, the required translation of the language components is inserted into the user interface from the recorded data corresponding to the equivalent unique labels.

## Description

This invention relates to a method for producing a user interface translation system. The invention is particularly, although not exclusively, of advantage with respect to Broadcast Data Receiver apparatus (BDR's).

User interfaces are typically provided for display on a display screen of an electronic device, to allow effective operation and control of the electronic device by a user. The language components of the user interfaces are typically provided in a first language set by the manufacturer, such as English. However, in order to allow effective operation of the electronic device by a user whose language is different to the first language provided in the interface, each language component of the interface typically needs to be translated into an appropriate language.

In many interface operating systems for international use, the appropriate translations corresponding to the language components of the interface are stored in text files, with separate files being -used per different translation and per interface. A particular file containing the desired translation can then be applied to the interface to convert the language components in the first language to the desired language. A problem with this is that a word in one particular language can contain a certain number of characters, which, when translated into a different language can contain a larger or smaller number of characters. As such, the locations/buttons on the interface for which the language components are designed to fit in one language, may be too small or too big to fit the translations therein. This is obviously undesirable and may result in the language components of a translated interface being truncated and thus being unclear or meaningless to a user. In addition, it is typically time consuming and therefore expensive to manually adjust the size of the locations/buttons of an interface for each different translation.

It is therefore an aim of the present invention to provide a method of producing a user interface translation system for an electronic device which overcomes the abovementioned problems.

According to a first aspect of the present invention there is provided a method for producing a user interface translation system for an electronic device, said device having a display screen for display of a user interface, said method comprising the steps of attaching a unique label to each language component of the user interface, storing data relating to each unique label of the language components in storage means, together with equivalent translations of each language component into at least one other language, linking the stored data with the user interface, matching each unique label of the interface with the equivalent unique label of the recorded data and, upon selection of one of the available languages, and inserting the required translation of the language components into the user interface from the recorded data corresponding to the equivalent unique labels.

Preferably the storage means in which the data is recorded includes a file containing the unique labels of each language component of the interface. In one embodiment the single file is typically stored on a hard disk drive of the electronic device.

Preferably the unique labels within the file are linked to a plurality of foreign translations corresponding to each language component.

Preferably the user interface is for a broadcast data receiver (BDR) (also referred to as a set-top-box) of the type receiving audio, visual and/or auxiliary data from a remote broadcaster.

Preferably the unique labels are provided with delimiting means to allow the matching of the labels with the corresponding translation in the file.

Preferably the language components of the user interface include words, numbers, symbols and/or sentences. Typically the user interface is generated on a display screen provided or connected to the electrical device. When the device is a BDR, the interface is typically a television screen connected to the BDR.

Preferably the language components are provided in specific locations/buttons on the user interface.

Preferably the system adjusts the size of the locations/buttons of the interface accordingly to allow the translation to fit therein.

In one embodiment, selection of an available language is performed by the user from a drop down menu appearing or selected on the display screen.

In one embodiment the user interface translation system is provided for use in a broadcast data receiver, the interface providing user control of the broadcast data receiver. The broadcast data receiver typically receives broadcast digital data from a remote source and decodes the data for display on a display screen, audio for speakers and/or the like.

According to a second aspect of the present invention there is provided an electronic device having a user interface translation system, said device having a display screen for display of a user interface, and characterised in that said user interface translation system includes the attachment of unique labels to each language component of the user interface, the storage of data relating to each unique label of the language components in storage means, together with equivalent translations of each language component into at least one other language, the stored data being linked with the user interface so that each unique label of the user interface is matched with an equivalent unique label of the stored data, and whereupon selection of one of the available languages results in the selection and insertion of the required translation of the language components into the user interface from the stored data corresponding to the equivalent unique labels.

An advantage of the present invention is that the translation system can be used both to translate the language components of the interface into a required language and adjust the icons/buttons/locations on the interface to fit the translation using the unique labels. This method significantly reduces the time taken to manually translate each language component and fit the translation onto a button or location on the interface. The method of the present invention also reduces the chance of error occurring during translation. Maintenance of the user interface therefore becomes simpler and global changes to the interface can be made using a single file, by the interface designers.

In a further advantage, when designing the user interface for a particular language, textual messages can be changed without having to search into the often complex files forming the user interface. In addition, linguists receive only a single file of language components to translate and they do not need to be concerned with the actual files comprising the user interface. For example, a user interface might use a combination of HTML and ASCII (American Standard Code for Information Interchange) files and this unnecessary complexity is hidden from the linguists.

A yet further advantage of the present invention is that since the translate system simply implements replacement of the unique label, its usage may be extended beyond translations. For example, if a common background colour is used on all user interface screens, a special label may be used that contains that colour information. If this colour then needs to be changed, only the colour in the single translation file needs to be changed, rather than many files as is required conventionally.

Furthermore -the translation system of the present invention has pre-programmed knowledge of how to manipulate textual substitutions as appropriate to the situation. For example, it can substitute characters reserved in the W3C standards with the appropriate escaped counterparts, whilst not effecting reserved character set sequences (such as UTF8), as a simple search and replace operation would. Thus the present invention provides means for substituting text strings within HTML pages written in any character set whilst fully preserving the integrity of the data content.

An embodiment of the present invention will now be described with reference to the following description and the accompanying Figures; wherein
Figure 1 illustrates a menu bar in a first language displayed on screen; and
Figure 2 illustrates a menu bar displayed on screen and generated in a second language using the invention.

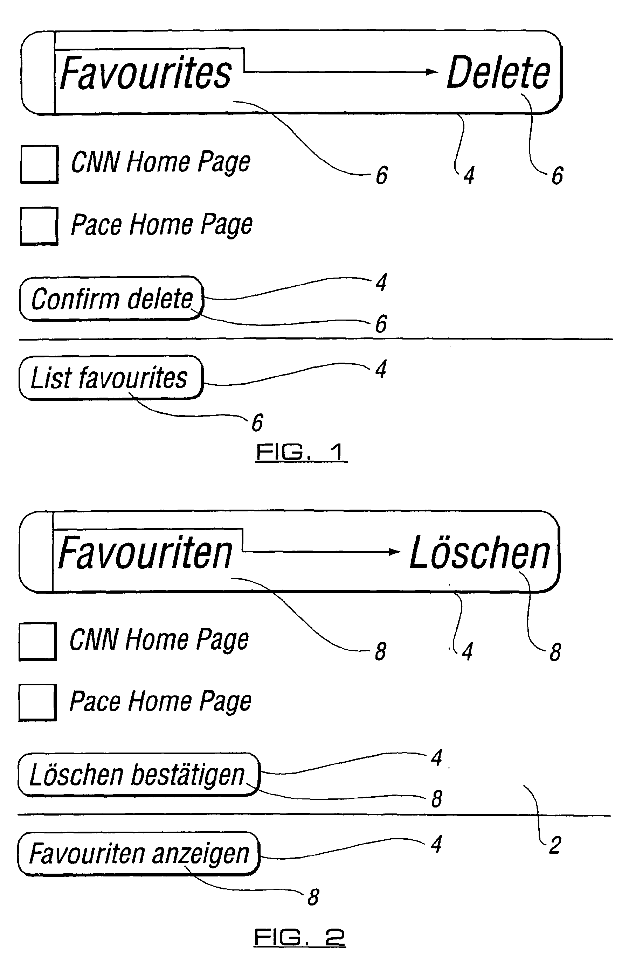

With reference to Figure 1 a user interface 2 displayed on screen typically comprises a plurality of buttons/icons/locations 4 in which language components 6 are contained to allow a user to navigate -through the interface to control and/or operate an electronic device. An example of language components can include menu bar options, such as a "start" button, "file" button, "help" button, "edit" button and/or the like.

The language components of the user interface are provided, in Figure 1, in English 6 and the locations 4 are appropriately sized to fit the language components therein. If the language components then need to be translated to allow a foreign speaking user to operate the device, conventionally each language component would typically need to be checked to see if the translation fits into the space in the required button. This is obviously time consuming and undesirable.

In accordance with the embodiment of the present invention, when designing the user interface the series of files that are used to make up the user interface are each taken in turn and each language component (i.e., each word and/or sentence) within the file is replaced by a unique label, which in this description is referred to as a "token". The language components and the corresponding tokens are copied to a separate file called the "token file" which is used by the translation system. The process of applying a token is referred to as "tokenisation". An example of an extract prior to tokenisation is as follows:
<CENTER>
<H2>Translation system</H2>
This is an example of the tokenisation process
<BR>
<EM>End of Example</EM>
</CENTER>

An example of the above extract following tokenisation is as follows:
<CENTER>
<H2>««translate_heading»»</H2>
««translate_text»»
<BR>
<EM>««translate_footer»»</EM>
</CENTER>

In the above example, the tokens are delimited by "««" and "»»" in order that the translate system can recognise them in amongst the surrounding text. The delimiters are configurable, thus adding flexibility to the process and prevents a problem where the delimiters themselves are used in the user interface.

The resulting token file of the above example would then be in the form <token_name>:<language_component><EOL> (End of Line) as follows:
Translate_heading:Translation system
Translate_text:This is an example of the tokenisation process
Translate_footer:End of example

The token names can be varied providing that the tokens are unique for each language component of the user interface.

After tokenisation a single token file is produced containing a set of unique tokens referencing all language components of the user interface. The language components of the token file are translated into one or more appropriate languages, the token names remaining unchanged. For example,

The token- entry for Dbox_poweroff_query; in English reads as;
Dbox_poweroff_query:Are you sure you want to power off?
And translates in Swedish to:
Dbox_poweroff_query:Vill du Stänga av?

The translated token file is then linked or integrated into the software component of the user interface. A software system locates each token of the user interface, performs a match against the tokens in the token file and the text corresponding to the token is then placed into the newly constructed user interface in place of the token.

Upon completion, the result is a new set of user interface files, each translated into a target language which fit into the required icon/buttons/locations of the interface. The icons/buttons/locations 4 can be resized as is shown in this example in Figure 2 by placing the required sizes in the translation files with the tokens and the result is as shown in Figure 2 where the interface 2 is shown in a German language components 8 format.

In practice the English language format can be used as the standard format , the method employed is to have a modified version of the tokenised (template) file for the German and/or other language requirements. In this case, a larger icon has been provided and is referenced by the German file only; the UK file uses the standard size icon 4.

During the construction of the translation system, typically automated as part of the system development, the appropriate tokenised file is chosen dependant upon the target locale for the development and the directory structure used is similar to the following:

| Translate | (directory for tokenised files) |
|---|---|
| +--UK | |
| +--favourites.htm | (favourites list) |
| +--history.htm | (history list) |
| +--recentlist.htm | (recent history list) |
| | |
| +--Germany | |
| +--favourites.htm | (favourites list with large buttons) |
| | |
| +--Spain | |

(Note the locales used as directory names.) The UK interface is considered to be the "common" set of resources; if the file is not available in the target locale directory then the UK one is chosen as the default. In the example above, the favourite programmes interface display (favourites.htm) has had to have a modification to specify a larger button size in the German interface; note that the Spanish directory is empty, and therefore the default UK tokenised files would apply in this instance. Note also that "history.htm" and "recentlist.htm" are identical to the UK version in all locales and so only certain interfaces may be translated.

The supplied user interface interfaces of Figures 1 and 2 illustrate the result. The "Confirm delete" and "List favourites" buttons have been resized in the German variant to accommodate the longer translation.

Thus the present invention allows global changes to a user interface to be performed both quickly and easily without the requirement to change multiple files. Maintenance of the user interface can--be undertaken easily, with any updates simply made to a single token file. As the token entries are used in the user interface files, these do not need to be changed and so the designers of the different languages interfaces do not have to redesign these files. Instead they need only generate one new language file for the particular language and in relation to the clearly identified passages of text.

This therefore allows, in use the easy generation of the user interface for a particular language and with icons/buttons/locations which are sized accordingly to fit the particular language requirements.

## Claims

1. A method for producing a user interface translation system for an electronic device, said device having a display screen for display of a user interface and **characterised in that** said method includes the steps of attaching a unique label to each language component of the user interface, storing data relating to each unique label of the language components in storage means, together with equivalent translations of each language component into at least one other language, linking the stored data with the user interface, matching each unique label of the interface with the equivalent unique label of the recorded data and, upon selection of one of the available languages, and inserting the required translation of the language components into the user interface from the recorded data corresponding to the equivalent unique labels.

2. A method according to claim 1 **characterised in that** the storage means in which the data is recorded includes a file containing the unique labels of each language component of the interface.

3. A method according to claim 2 **characterised in that** the unique labels within the file are linked to a plurality of foreign translations corresponding to each language component.

4. A method according to claim 1 **characterised in that** the electronic device is a broadcast data receiver.

5. A method according to claim 1 **characterised in that** the unique labels are provided with delimiting means.

6. A method according to claim 1 **characterised in that** the language components of the user interface include words, numbers, symbols and/or sentences

7. A method according to claim 1 **characterised in that** the language components are provided at specific locations and/or in buttons on the user interface.

8. A method according to claim 7 **characterised in that** the user interface translation system adjusts the size of the locations and/or buttons of the interface accordingly to allow the translation to fit therein.

9. An electronic device having a user interface translation system, said device having a display screen for display of a user interface, and **characterised in that** said user interface translation system includes the attachment of unique labels to each language component of the user interface, the storage of data relating to each unique label of the language components in storage means, together with equivalent translations of each language component into at least one other language, the stored data being linked with the user interface so that each unique label of the user interface is matched with an equivalent unique label of the stored data, and whereupon selection of one of the available languages results in the insertion of the required translation of the language components into the user interface from the recorded data corresponding to the equivalent unique labels.

10. An electronic device according to claim 9 **characterised in that** the display screen is a television set connected to or integrally formed with said device.

11. An electronic device according to claim 9 **characterised in that** the device is a broadcast data receiver.
